# EUROPÄISCHE PATENTANMELDUNG

(11) **EP 1 712 848 A2**
(43) Veröffentlichungstag der Anmeldung: **18.10.2006**
(21) Anmeldenummer: 05090227.9
(22) Anmeldetag: 04.08.2005
(51) Int. Cl.: F24F 13/02

(54) **Raumlüftungs-Gerätschaft**

(30) Priorität: 14.04.2005 DE 202005006242 U
(71) Anmelder: Zürcher, Thomas, 8904 Urdorf (CH)
(72) Erfinder: Zürcher, Thomas, 8904 Urdorf (CH)
(74) Vertreter: Meys, Hildegard

(57) **Zusammenfassung**

Es wird eine aus formstabilem Kunststoff-Material bestehende Gerätschaft für die kontrollierte Raumlüftung (KWL) beschrieben, die besteht aus einem mit einem Haupt-Anschluss-Stutzen (2) und mit mehreren Aus-/Einlassöffnungen (3,4) ausgerüsteten Sammel- und Verteilerkasten (1), und aus mehreren mit mindestens zwei Aus-/Einlassöffnungen (6,7) ausgerüsteten Luftdurchlassgehäusen (5), und aus mehreren mindestens an ihren Enden als Wellenrohr ausgebildeten Leitungsrohren (8), und aus mehreren in die Aus-/Einlassöffnungen (3,4 und 6,7) einpassbaren, im hinteren Bereich Rückhaltekrallen (11) aufweisenden Einzel-Anschluss-Stutzen (9) für Leitungsrohr (8). Die erfindungsgemässe Gerätschaft wird in der Haustechnikbranche eingesetzt und lässt sich bevorzugt in Wohnungen, Einfamilienhäusern, Geschäftshäusern, Schul- und Lagergebäuden benutzen.

## Beschreibung

Die Erfindung bezieht sich auf eine Gerätschaft bei der Raumlüftung.
Die seit einigen Jahren geltende Energiesparverordnung für energiesparenden Wärmeschutz und energiesparende Anlagetechnik bei Gebäuden erfordert die kontrollierte Wohnraumbelüftung (KWL). Da moderne Gebäude dicht gedämmt gebaut werden und bei Altbausanierungen zur Vermeidung von Wärmeverlusten ebenfalls möglichst fugendichte Dämmung angestrebt wird, fehlt der natürliche Luftaustausch in derart dicht gedämmten Gebäuden. Dadurch verschlechtert sich die Qualität der Raumluft. Durch Ausdünstungen und eingebrachte Feuchtigkeit reichert sich die Raumluft mit Schadstoffen an. Die Folgen sind Schimmelpilzbildung und Bakterienvemehrung in den Räumen. Dagegen vorgenommenes häufiges Öffnen von Fenstern führt zu hohem Wärmeverlust; zu geringes Fensterlüften schadet der Gesundheit der Raumbenutzer. Eine kontrollierte Raumlüftung mit einer handlichen Zentral-Gerätschaft ist die beste Lösung, frische Luft in jeden einzelnen Raum zu bekommen und die Feuchtigkeit ins Freie zu befördern. Wenn die Wärme aus der Raumabluft über Wärmeaustauscher geführt wird, wird die einströmende kalte Aussenluft im Winter vorgewärmt, so dass ein hoher Prozentsatz der Wärme der Raumluft zurückgeführt wird. Selbst bei beengten Verhältnissen können durch ein solches Luftführungssystem die Anforderungen an eine kontrollierte Raumlüftung erfüllt werden.

Gegenstand der Erfindung ist eine Gerätschaft, die als Bestandteil der kontrollierten Raumlüftung dient. Die erfindungsgemässe Gerätschaft besteht komplett aus formbeständigem Kunststoff-Material, wie es auch in der Lebensmittelindustrie eingesetzt wird, welches keinerlei Ausgasung aufweist. Die erfindungsgemässe Gerätschaft ist kombiniert aus einem zentralen Sammel- und Verteilerkasten für Zu- und Abluft mit einem Haupt-Anschluss-Stutzen und mit mehreren Aus-Einlassöffnungen, und aus mehreren Luftdurchlassgehäusen für die einzelnen Räume, die ebenfalls Aus-/Einlassöffnungen haben. Es sind Leitungsrohre zwischen dem Sammel- und Verteilerkasten und den einzelnen Luftdurchlassgehäusen sowie dazu Einzel-Anschluss-Stutzen für die Leitungsrohrenden vorhanden. Mittels den Einzel-Anschluss-Stutzen werden die Leitungsrohre einerseits mit einer Aus-/Einlassöffnung des zentralen Sammel- und Verteilerkastens und andererseits mit einer der Aus-Einlassöffnungen der Luftdurchlassgehäuse in den einzelnen Räumen fest verbunden. Dazu weisen die Anschluss-Stutzen im hinteren Bereich Rückhaltekrallen auf, und die Leitungsrohre sind mindestens an ihren beiderseitigen Enden als Wellenrohre geformt, so dass das eingeführte Kunststoff-Wellenrohr ohne zusätzliche Fixierung in dem Sammel- und Verteilerkasten beziehungsweise in dem jeweiligen Luftdurchlassgehäuse automatisch zurückgehalten wird. Die Luftdurchlassgehäuse sind zweckmässig je mit einem Abdeck-Durchlass-Gitter bestückt, und dieses besteht vorteilhaft aus zwei Teilen, der Gitter-Abdeckung und einklinkbaren Befestigungsklammem, die kurz vor der Montage einfach in der Abdeckung eingeklinkt werden können, was vorteilhaft ist in bezug auf Lagerhaltung und Transport.

Bei dem Sammel- und Verteilerkasten sitzt der Haupt-Anschluss-Stutzen zweckmässig auf einem beispielsweise mit Schrauben auf dem Kasten befestigten Deckelteil. Das hat den Vorteil, dass der Stutzen vor dem Einbetonieren des Kastens nach innen gedreht und in dieser Stellung festgeschraubt werden kann; und nach dem Ausschalen der Betondecke können dann die Schrauben gelöst, der Deckelteil mit Anschluss-Stutzen wieder nach aussen gedreht und in dieser Stellung erneut mittels der Schrauben befestigt und fixiert werden. Der Sammel- und Verteilerkasten hat zweckmässig senkrechte Seitenwände und ist vier- oder mehreckig geformt, wobei alle Seitenwandteile eine oder mehrere Aus-/Einlassöffnungen aufweisen. Man kann eine Mehrzahl von Anschluss-Stutzen für eine Mehrzahl Leitungsrohre zu einer Mehrzahl von Luftdurchlassgehäusen in einer Mehrzahl von Gebäude-Räumen anschliessen.

Für Aus-/Einlassöffnungen, die nicht für den Anschluss von Leitungsrohr benötigt werden, sind passende Blinddeckel vorhanden, die die sichere Abdichtung des Sammel- und Verteilerkastens unabhängig von der Anzahl der eingepassten Anschluss-Stutzen gewährleisten. Die Höhe der Seitenwände sollte zweckmässig etwas grösser sein als die Höhe des Haupt-Anschluss-Stutzens, gemessen von dessen Bodenansatz am Deckelteil bis zum Stutzenende. Das ermöglicht und vereinfacht das Ein- und Ausbringen des Stutzens ein bzw. aus dem Sammel- und Verteilerkasten vor und nach dem Einbetonieren.
Die Luftdurchlassgehäuse für die einzelnen Räume sind zweckmässig ebenfalls mit senkrechten Seitenwandteilen geformt und vorteilhaft rechteckig ausgebildet. Es sind mindestens zwei Aus-/Einlassöffnungen vorhanden, mindestens eine der Aus-Einlassöffnungen befindet sich in einer der Seitenwände und mindestens eine weitere Aus-/Einlassöffnung befindet sich in der Bodenplatte des Gehäuses. Das hat den Vorteil, dass man passend zur jeweiligen Raumgestaltung den Leitungsrohr-Anschluss über den Anschluss-Stutzen seitlich oder hinten vorsehen kann. Zur Optimierung der Stabilität können Verstärkungen, zum Beispiel im äusseren Bereich der Luftdurchlassgehäuse angebracht werden. Das sichert eine aus Gründen der Hygiene vorteilhaft durchgehend glatte Innenfläche der Luftdurchlassgehäuse. Es können gewünschtenfalls mehrere Seiten der Luftdurchlassgehäuse konstruktiv so vorgesehen werden, dass sich zum einen offene Öffnungen und andererseits geschlossene Öffnungen, die man nachträglich einfach herausbrechen kann, ergeben. Die dann noch offenen Öffnungen können dann mit Blinddeckeln verschlossen werden, und auch für die jeweils nicht benötigten Aus-/Einlassöffnungen können passende Blinddeckel eingesetzt werden. Aus-/Einlassöffnungen und Blinddeckel sind so dimensioniert, dass die Anschluss-Stutzen beliebig im Sammel- und Verteilerkasten und in den einzelnen Luftdurchlassgehäusen benutzt werden können.

Die erfmdungsgemässe Gerätschaft hat den Vorteil, dass mit den vergleichsweise wenigen verschiedenen Einzelteilen vielerlei individuelle Kombinationen gestaltet werden können, die exakt den jeweiligen Raumverhältnissen in den zu belüftenden Gebäuden anpassbar sind.
Die Herstellung der Einzelteile erfordert vergleichsweise geringen Aufwand und erlaubt eine entsprechend vorteilhafte Massenfertigung.

Die Dimensionen der Einzelteile können entsprechend den üblichen Normen festgelegt werden, und die Gerätschaft kann an die Normen jederzeit entsprechend angepasst werden. Die Farbgebungen können wahlweise einerseits direkt durch Herstellung der Teile aus entsprechend farbigem Granulat gefertigtem Kunststoff-Material gestaltet werden, oder andererseits kann die Farbe mittels geeignetem Lack- oder Farbanstrich nachträglich auf die fertigen Teile aufgebracht werden. Das Kunststoff-Material kann so ausgewählt werden, dass es einerseits im Winter bei kalter Witterung und andererseits im Sommer, wenn es sehr warm ist, den Arbeitsbedingungen entspricht. Die erfmdungsgemässe Gerätschaft hat, da sie komplett aus relativ leichtgewichtigem Kunststoff-Material besteht, Gewichtsvorteile gegenüber Systemen aus Metall. Die Korrosionsbeständigkeit ist hervorragend gut und die Transport-, Lagerungs- und Handhabungseigenschaften sind äusserst vorteilhaft.
Die erfmdungsgemässe Gerätschaft wird in der Haustechnikbranche eingesetzt als Bestandteil der kontrollierten Wohnraumlüftung (KWL) und lässt sich bevorzugt in Wohnungen, Einfamilienhäusern, Geschäftshäusern, Schul- und Lagergebäuden einsetzen.

Anhand der beigefügten Zeichnungen wird die Erfindung nachstehend beispielsweise noch näher erläutert.
Es zeigen jeweils in der Ansicht:
- Fig. 1: einen Sammel- und Verteilerkasten mit nach innen gerichtetem Haupt-Anschluss-Stutzen,
- Fig. 2: den Deckel des Sammel- und Verteilerkastens der Fig. 1 (verkleinert),
- Fig. 3: den Sammel- und Verteilerkasten der Fig. 1 mit nach aussen gerichtetem Haupt-Anschluss-Stutzen,
- Fig. 4: einen Einzel-Anschluss-Stutzen,
- Fig. 5: einen Blinddeckel,
- Fig. 6: einen Einzel-Anschluss-Stutzen mit eingepasstem Leitungsrohrende,
- Fig. 7: ein Luftdurchlassgehäuse ohne Deckelteil,
- Fig. 8: einen Deckel für ein Luftdurchlassgehäuse,
- Fig. 9: ein Luftdurchlassgehäuse mit seitlich eingesetztem Anschluss-Stutzen, ohne Deckel, und
- Fig. 10: ein Luftdurchlassgehäuse mit im Boden eingesetztem Anschluss-Stutzen, ohne Deckel.

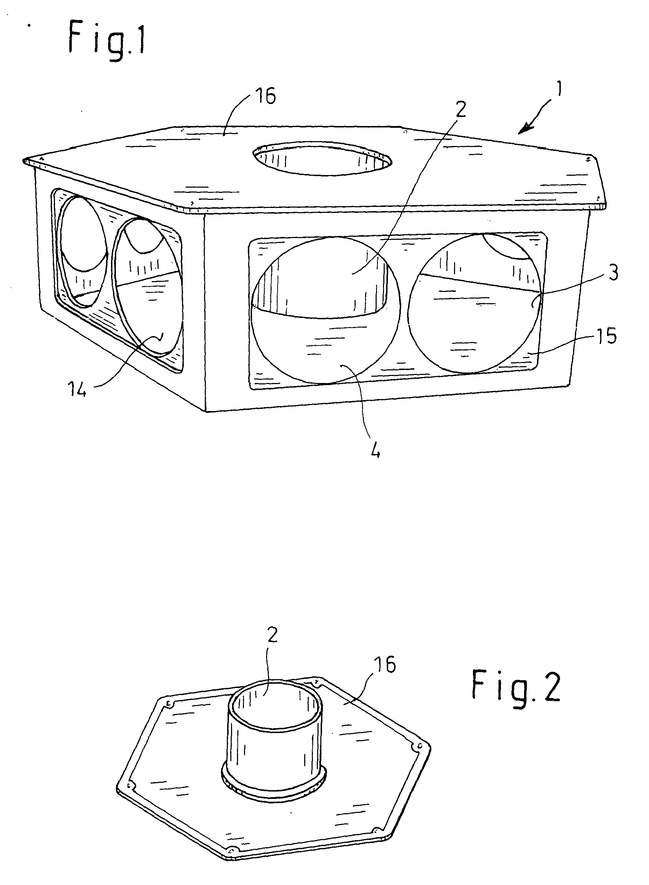

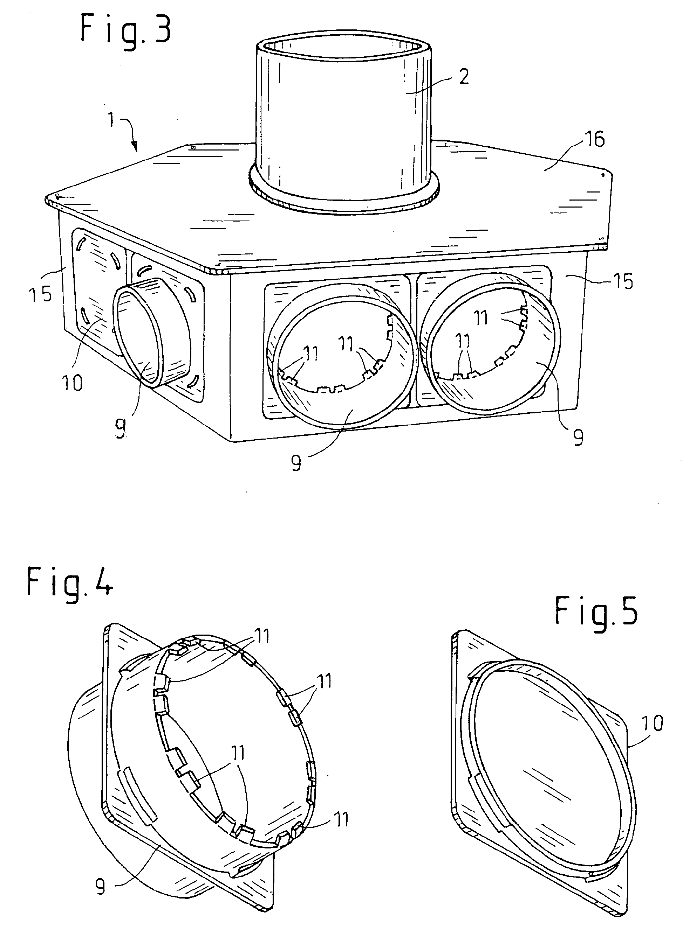

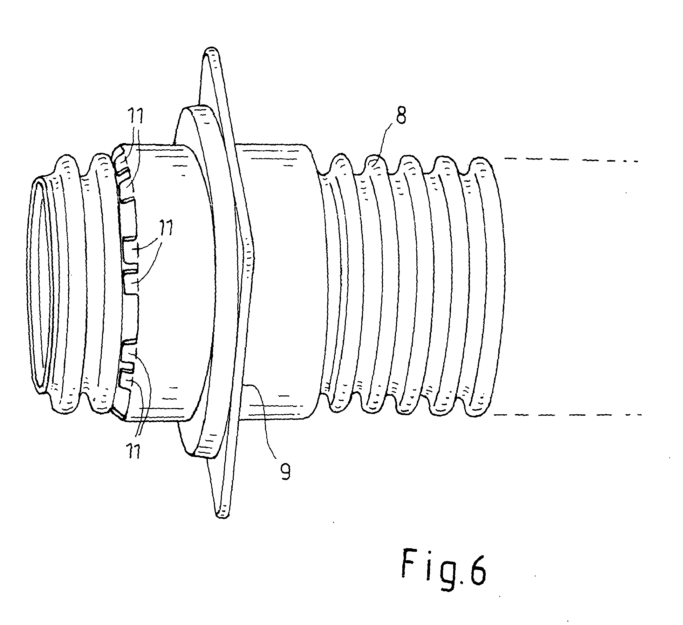

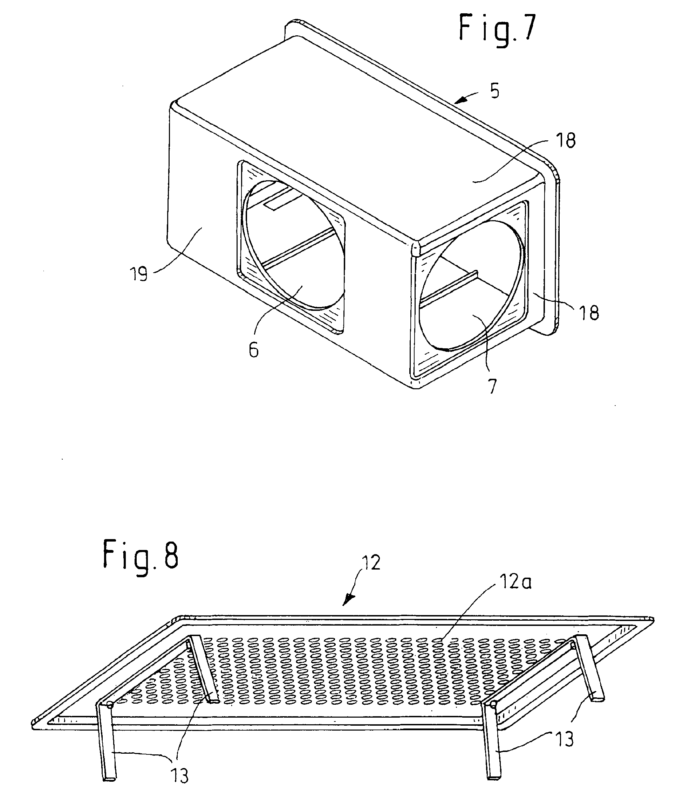

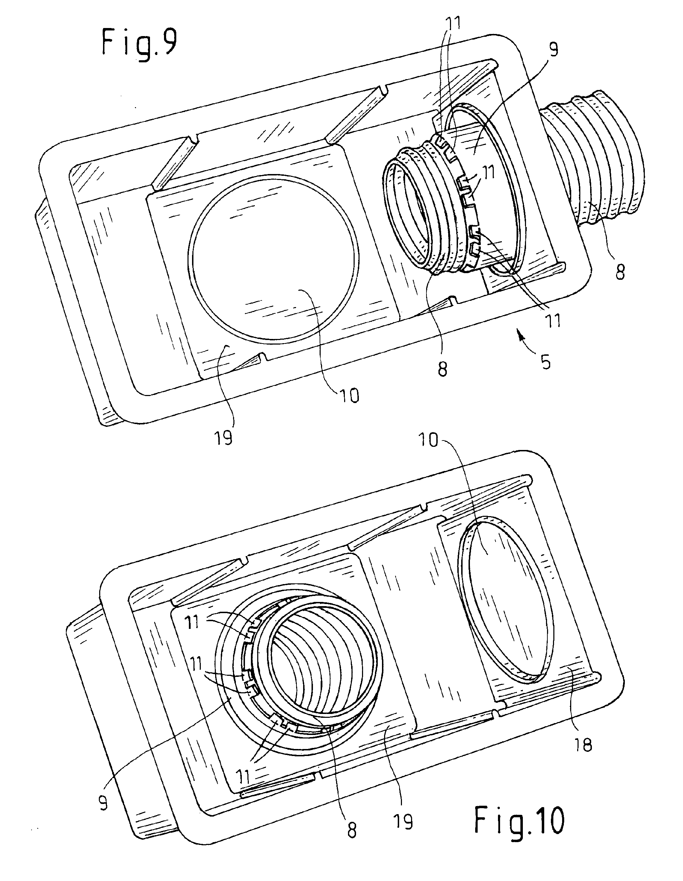

Der in Fig. 1 gezeigte Sammel- und Verteilerkasten 1 ist sechseckig und besteht aus einer Bodenplatte 14 und sechs rechtwinkligen Seitenteilen 15 sowie einem Deckelteil 16, welcher in Fig. 2 gesondert dargestellt ist. Der Deckel 16 ist mit der Oberkante der Seitenteile 15 verschraubt. Auf einer Fläche des Deckels 16 sitzt ein Haupt-Anschluss-Stutzen 2 fest auf. Die Seitenteile 15 weisen je zwei Aus-/Einlassöffnungen 3 und 4 auf. Die Höhe der Seitenteile 15 ist grösser als die Höhe des Stutzens 2, vom Deckelboden 16 gemessen. In der Darstellung der Fig.1 ist der Deckel 16 so auf den Seitenteilen 15 verschraubt, dass der Haupt-Anschluss-Stutzen 2 nach innen in den Kasten 1 platziert ausgerichtet ist. Dadurch erhält der Sammel- und Verteilerkasten 1 für Lagerung, Transport und Einbetonierung an Einsatzort vorteilhafte Gestalt. Nach dem Ausschalen der Betondecke lässt sich die Verschraubung ohne Schwierigkeit lösen, der Deckel 16 wird einfach gedreht und erneut auf dem Sammel- und Verteilerkasten 1 in nun umgekehrter Stellung verschraubt, wie dies in Fig. 3 gezeigt ist. Der Haupt-Anschluss-Stutzen 2 dient in dieser Einbaustellung als Einlass für den über einen üblichen (nicht gezeigten) Wärmeaustauscher zugeführten temperierten Luftstrom, der aus dem Sammel- und Verteilerkasten 1 durch Leitungsrohre in die einzelnen Gebäuderäume (Wohnen, Essen, Schlafen) geleitet wird. Oder er dient als Auslass, um die verbrauchte, warme Raumluft über einen üblichen (nicht gezeigten) Wärmetauscher der kalten Aussenluft zuzuführen, die durch Leitungsrohre aus den einzelnen Gebäuderäumen (Küche, Bad, Dusche, WC) geleitet ist.
Zum Anschluss der Leitungsrohre sind, wie in Fig. 3 veranschaulicht, Einzel-Anschluss-Stutzen 9 in Aus-/Einlassöffnungen 3 und 4 eingepasst. Die nicht mit Leitungsrohren bestückten Aus-/Einlassöffnungen im Sammel- und Verteilerkasten 1 werden mit einem Blinddeckel 10 abgedichtet. Ein Blinddeckel 10 ist in Fig. 5 veranschaulicht, und Fig. 4 zeigt einen Einzel-Anschluss-Stutzen 9. Die in dessen hinterem Bereich befindlichen Rückhaltekrallen 11 dienen dazu, das eingeführte Leitungsrohr 8, welches mit Wellenrohrende ausgebildet ist, zu greifen und automatisch festzuhalten, so dass keine zusätzliche Fixierung für das Leitungsrohr 8 in der Aus-/Einlassöffnung 3 bzw. 4 erforderlich ist. Diese Fixierung des Leitungsrohres 8 durch die Rückhaltekrallen 11 eines Einzel-Anschluss-Stutzens 9 ist in Fig. 6 veranschaulicht. Fig. 7 zeigt ein Luft-Einlass-Auslass-Gehäuse, das hier als Luftdurchlassgehäuse 5 bezeichnet wird. Solche Gehäuse 5 werden in denjenigen Räumen des Gebäudes eingebaut, die über kontrollierte Wohnraumlüftung (KWL) be- bzw. entlüftet werden sollen. Das Luftdurchlassgehäuse 5 hat rechteckige Kastenform und besteht aus plattenförmigen Seitenteilen 18 und Bodenteil 19 sowie einem Abdeckdurchlassgitter 12 als Deckelteil. In einem der Seitenteile 18 und im Bodenteil 19 ist je eine Aus-/Einlassöffnung 6 bzw. 7 vorhanden, die zur Einpassung von Leitungsrohrenden geeignet ist. Das Abdeckdurchlassgitter 12, das in Fig. 8 veranschaulicht ist, dient zur oberen Abdeckung des Luftdurchlassgehäuses 5. Dieses Abdeckgitter 12 für die Luftein- und Luftauslässe besteht aus zwei Teilen, aus der Abdeckung 12a und den Befestigungsklammem 13, die kurz vor der Montage einfach in die Abdeckung eingeklinkt werden. Das bringt Vorteile bei Transport und Lagerung; die Lagerhöhe für das Abdeckdurchlassgitter 12 wird wesentlich verringert. Die Aus-Einlassöffnungen 6 und 7 haben dieselben Abmessungen wie Aus-/Einlassöffnungen 3 und 4 im Sammel- und Verteilerkasten 1. Es können die gleichen Einzel-Anschluss-Stutzen 9 zum Einpassen der Leitungsrohrenden 8 und die gleichen Blinddeckel 10 zum Abdichten von nicht benötigten Anschlussöffnungen 6 bzw.7 verwendet werden. Das ist in den Figuren 9 und 10 veranschaulicht. In Fig. 9 ist ein Luftdurchlassgehäuse 5 (ohne obere Abdeckung) mit seitlich eingesetztem Einzel-Anschluss-Stutzen 9 und mittels der dem Stutzen 9 ansitzenden Rückhalteklammem 11 fixiertem Leitungsrohrende 8 dargestellt. Ein Blinddeckel 10 dichtet die Aus-/Einlassöffnung im Bodenteil 19 des Gehäuses 5 ab. Fig. 10 zeigt eine Ausführungsform, bei welcher ein (ohne Gitterabdeckung dargestelltes) Luftdurchlassgehäuse 5 über seinen Bodenteil 19 an das Leitungsrohrnetz angeschlossen ist. Der Anschluss-Stutzen 9 sitzt in der Aus-Einlassöffnung im Gehäuseboden 19 hinten und fixiert dort mittels seiner Rückhaltekrallen 11 das Leitungsrohrende 8, während die Aus-/Einlassöffnung im Seitenteil 18 mit einem Blinddeckel 10 abgedichtet ist. Auf diese Weise lassen sich optimale Leitungsrohrführungen realisieren, da die Anschlussmöglichkeiten für die einzelnen Elemente bei der erfindungsgemässen Gerätschaft variabel sind.

Alle Einzelelemente der erfindungsgemässen Gerätschaft lassen sich kostengünstig aus formstabilem, hygienisch einwandfreiem, geruchsneutralem, recyclebarem Kunststoff-Material fertigen, und sie sind leichtgewichtig, korrosionsstabil und montagefreundlich, sowie einfach und rasch zu reinigen.

### Bezugszeichen-Liste

- 1: Sammel- und Verteilerkasten
- 2: Haupt-Anschluss-Stutzen
- 3: Aus-/Einlassöffnung an 1
- 4: Aus-/Einlassöffnung an 1
- 5: Luftdurchlassgehäuse
- 6: Aus-/Einlassöffnung an 5
- 7: Aus-/Einlassöffnung an 5
- 8: Leitungsrohrende
- 9: Einzel-Anschluss-Stutzen für 8
- 10: Blinddeckel für 3, 4, 6, und 7
- 11: Rückhaltekrallen an 9
- 12: Abdeckdurchlassgitter
- 12a: Gitterabdeckung bei 12
- 13: Befestigungsklammern an 12
- 14: Bodenplatte von 1
- 15: Seitenteile von 1
- 16: Deckel von 1
- 18: Seitenteil von 9
- 19: Bodenteil von 9

## Patentansprüche

1. Gerätschaft für die kontrollierte Raumlüftung, gebildet aus formstabilem Kunststoff-Material und bestehend aus einem Sammel- und Verteilerkasten (1) mit Haupt-Anschluss-Stutzen (2) und mehreren Aus-/Einlassöffnungen (3,4), und aus mehreren Luftdurchlassgehäusen (5) mit mindestens zwei Aus-/Einlassöffnungen (6,7), und aus mehreren Leitungsrohren (8),und aus mehreren Einzel-Anschluss-Stutzen (9) für Leitungsrohre (8), die sowohl in Aus-/Einlassöffnungen (3,4) als auch in die Aus-/Einlassöffnungen (6,7) einpassbar sind, sowie aus mehreren Blinddeckeln (10) für Aus-/Einlassöffnungen (3,4,6,7), **dadurch gekennzeichnet, dass** die Anschluss-Stutzen (9) im hinteren Bereich Rückhaltekrallen (11) aufweisen und die Leitungsrohre (8) mindestens an ihren Enden Wellenrohre sind.

2. Gerätschaft nach Anspruch 1, **dadurch gekennzeichnet, dass** die Luftdurchlassgehäuse (5) mit Abdeckdurchlassgittern (12) bestückt sind, welche an der Unterseite der Abdeckung einklinkbare Befestigungsklammem (13) aufweisen.

3. Gerätschaft nach Anspruch 1 oder 2, **dadurch gekennzeichnet, dass** der Haupt-Anschluss-Stutzen (2) am Sammel- und Verteilerkasten (1) abnehmbar und nach innen gedreht im Sammel- und Verteilerkasten (1) fixierbar gestaltet ist.
